# EUROPEAN PATENT APPLICATION

(11) **EP 2 549 793 A1**
(43) Date of publication of application: **23.01.2013**
(21) Application number: 10847648.2
(22) Date of filing: 19.03.2010
(51) Int. Cl.: H04W 28/18, H04L 12/28, H04W 76/02, H04W 76/04, H04W 88/02

(54) **MACHINE-TYPE COMMUNICATION METHOD AND SYSTEM AND CELL-SEARCH METHOD AND DEVICE**

(71) Applicant: Alcatel Lucent, 75007 Paris (FR)
(72) Inventor: CHEN, Yu, Shanghai 201206 (CN); DU, Hongfei, Shanghai 201206 (CN)
(74) Representative: 2SPL Patentanwälte
(86) International application number: PCT/CN2010/000336
(87) International publication number: WO 2011/113179

(57) **Abstract**

Embodiments of the present invention provide a machine-type communication method and system. Operation capabilities of a machine are determined through a negotiation between the machine and a network (101); and the machine communicates with the network based on the determined operation capabilities (102). By adopting a negotiation mechanism, costs of a machine-type communication are reduced. Embodiments of the present invention further provide a cell search method and device. Transmission parameters for a cell are pre-configured for a device fixed in the cell; the device directly matches the cell using the pre-configured transmission parameters; and the device directly receives data in the case of a successful match. By adopting a machnism of pre-configuring transmission parameters, a cell search process is simplified, and utilization of resources is improved.

## Description

### FIELD OF THE INVENTION

Embodiments of the present invention relate to a machine-type communication and a mobile communication, and, more specifically, to a machine-type communication method and system and a cell search method and system.

### BACKGROUND OF THE INVENTION

Different from a communication between humans, a machine-type communication has to take into account many factors, such as module design costs, performances, power consumptions etc., so as to achieve an effect of optimal applicability. Such machines will be developed and produced in mass in the future.

The machine is designed for a specific application. For example, a machine is designed specifically for intelligent metering. Further, for many types of machines, a low power consumption is also important. Additionally, there are different operators adopting different strategies and even multiple machine manufacturers in a network, and machines are required to run in operator's networks.

In view of the above aspects, capabilities of a machine should be configured for a specific application. For example, in 3rd Generation Partnership Project Radio Access Network (3GPP RAN), it is required for a terminal to be pre-configured with respect to a specific application supported channels, encoding schemes, bandwidths, and the like. However, such a scheme of pre-configuring the capabilities of the machine for the specific application improves the costs of the machine-type communication. Therefore, it is desirable for a machine-type communication method and system to reduce the costs.

In a mobile communication, a machine has to perform a cell search to determine a network available to the terminal, and communicates in the network. In existing cell search methods, a machine searches a cell with the best signal across all cells; if an available cell is successfully found, it receives a broadcast channel (BCH) and then receives data and cell-specific reference signals from the network to perform communications; otherwise, it performs cyclic search. However, for a machine fixed in a cell (for example, an intelligent metering device), such a cell search process in the existing cell search methods is complex and resource-consuming. Therefore, it is desirable for a cell search method and device to simplify the communication process in a scenario where a machine is fixed in a cell.

### SUMMARY OF THE INVENTION

An objective of the embodiments of the present invention is to provide a machine-type communication method and system that can reduce costs.

Therefore, according to one aspect of the present invention, an embodiment of the present invention provides a machine-type communication method. The method comprises: determining operation capabilities of a machine through a negotiation between a machine and a network; communicating, by the machine, with the network based on the determined operation capabilities.

In an embodiment of the present invention, the negotiation may comprise: sending, by the machine, specific capabilities thereof to the network; and determining, by the network, the operation capabilities of the machine based on the specific capabilities of the machine, and sending the operation capabilities to the machine.

In an embodiment of the present invention, determining, by the network, the operation capabilities of the machine based on the specific capabilities of the machine may comprise: weighing, by the network, the operation capabilities most suitable for the machine by retrieving operator strategies, charging modes, and a user database.

Advantageously, the method of the embodiments of the present invention may further comprise: broadcasting, by the network, specific capabilities of the network to the machine while sending the operation capabilities to the machine; and determining, by the machine, an optimal operation capability based on the operation capabilities and the specific capabilities from the network, so as to communicate with the network using the optimal operation capability.

Preferably, the specific capabilities comprise supported capabilities and preferred capabilities.

Preferably, the capabilities comprise the capabilities on a physical layer link.

According to another aspect of the present invention, an embodiment of the present invention provides a machine-type communication system, comprising a network configured to determine operation capabilities of a machine through a negotiation with the machine; the machine configured to communicate with the network based on the determined operation capabilities.

In an embodiment of the present invention, the machine may comprise: a specific capability sending module configured to send specific capabilities of the machine to the network; an operation capability receiving module configured to receive the operation capabilities from the network, and an application module configured to communicate with the network based on the operation capabilities; and the network may comprise: an operation capability determining module configured to determine the operation capabilities of the machine based on the specific capabilities of the machine, and an operation capability sending module configured to send the determined operation capabilities to the machine.

In an embodiment of the invention, the operation capability determining module may weigh the operation capabilities most suitable for the machine by retrieving operator strategies, charging modes, and a user database.

Advantageously, the operation capability sending module is configured to broadcast specific capabilities of the network to the machine while sending the operation capabilities to the machine; the operation capability receiving module is configured to receive the operation capabilities and the specific capabilities from the network; and the application module is configured to determine the optimal operation capability based on the operation capabilities and the specific capabilities from the network so as to communicate with the network using the optimal operation capability.

Preferably, the specific capabilities may comprise supported capabilities and preferred capabilities.

Preferably, the capabilities may comprise the capabilities on a physical layer link.

### BRIEF DESCRIPTION OF THE DRAWINGS

With reference to the accompanying drawings, the above and other aspects, features, and advantages of the present invention will become more apparent from detailed description below of the non-limiting embodiments of the present invention, wherein:

Fig. 1 shows a flowchart of a generic conception of a machine-type communication method according to an embodiment of the present invention;

Fig. 2 shows a schematic diagram of a physical layer link in 3GPP RAN;

Fig. 3 shows a flowchart of a machine-type communication method according to an embodiment of the present invention;

Fig. 4 shows an information transfer diagram of a machine-type communication method according to an embodiment of the present invention;

Fig. 5 shows a schematic diagram of factors that have to be taken into account for weighing the operation capabilities most suitable for a machine;

Fig. 6 shows a functional block diagram of a machine-type communication system 600 according to an embodiment of the present invention;

Fig. 7 shows a flowchart of a cell search method according to an embodiment of the present invention;

Fig. 8 shows a functional block diagram of a cell search device 800 according to an embodiment of the present invention.

### DETAILED DESCRIPTION OF THE PREFERRED EMBODIMENTS

The exemplary embodiments of the present invention will be described below with reference to the accompanying drawings. In the exemplary embodiments, 3GPP RAN is taken as an example. However, those skilled in the art would understand that the scope of the present invention is not limited thereto, and the exemplary embodiments are merely for the purposes of description; thus, the exemplary embodiments should be considered as examples of the present invention, instead of any limitation to the present invention; any solution utilizing the embodiments of the present invention should fall within the protection scope of the present invention.

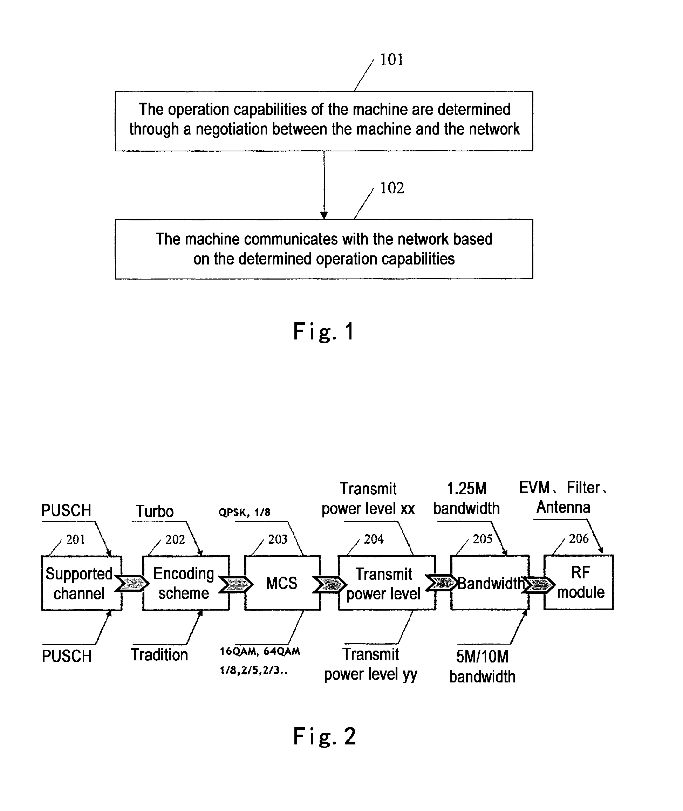

Fig. 1 shows a flowchart of a generic conception of a machine-type communication method according to an embodiment of the present invention.

As shown in Fig. 1, in step 101, a machine negotiates with a network to determine operation capabilities of the machine. In step 102, the machine communicates with the network based on the determined operation capabilities. Different from pre-configuring capabilities for a machine with respect to a specific application in the prior art, the embodiment of the present invention determines the capabilities of the machine through a negotiation, thereby reducing costs of the machine-type communication and eliminating the deficiency of the increased costs due to the pre-configured capabilities.

The method according to the embodiments of the present invention is illustrated below with 3GPP RAN as an example.

Fig. 2 shows a schematic diagram of a physical layer link in 3GPP RAN.

The physical layer link may comprise supported physical layer channels, FECs, modulation settings, allowed transmit powers, bandwidths, and RF modules, etc. In this example, as shown in Fig. 2, the physical layer link comprises the following physical layer blocks: a supported channel 201, an encoding scheme 202, a modulation and coding scheme (MCS) 203, a transmit power level 204, a bandwidth 205, and a radio frequency (RF) module 206, wherein the supported channel 201 may comprise a capability of PUSCH, PDSCH and the like; the encoding scheme 202 may comprise a capability of Turbo coding, traditional coding and the like; MCS 203 may comprise a capability of QPSK (1/8), 16 QAM, 64 QAM (1/8, 2/5, 2/3) and the like; the transmit power level 204 may comprise a capability of a transmit power level xx and transmit power level yy and the like, the bandwidth 205 may comprise a capability of 1.25M bandwidth and 5M/10M bandwidth and the like; the RF module 206 may comprise a capability of an error vector magnitude (EVM), a filter, an antenna, and the like. In the physical layer link, the machine may support a portion of the capabilities for each physical layer block.

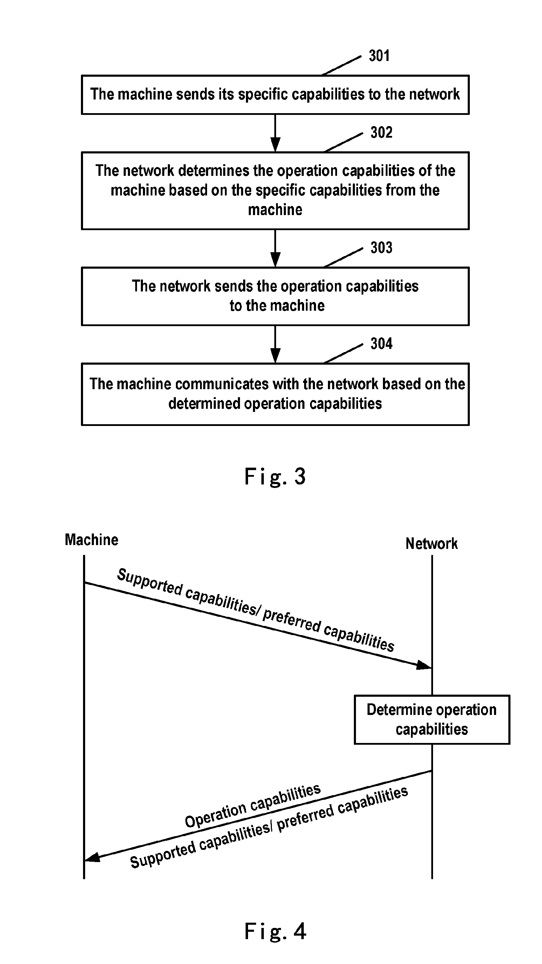

Fig. 3 shows a flowchart of a machine-type communication method according to an embodiment of the present invention. Fig. 4 shows an information transfer diagram of a machine-type communication method according to an embodiment of the present invention.

As illustrated in Figs. 3 and 4:

In step 301, a machine sends its specific capabilities to a network.

The machine may send the capabilities supported by the machine to the network. Alternatively, the machine may send to the network capabilities which it considers preferred.

In step 302, the network determines operation capabilities of the machine based on the specific capabilities from the machine.

Specifically, after receiving the supported capabilities or preferred capabilities from the machine, the network retrieves operator strategies, charging modes, and a user database, thereby weighing the operation capabilities most suitable to the machine.

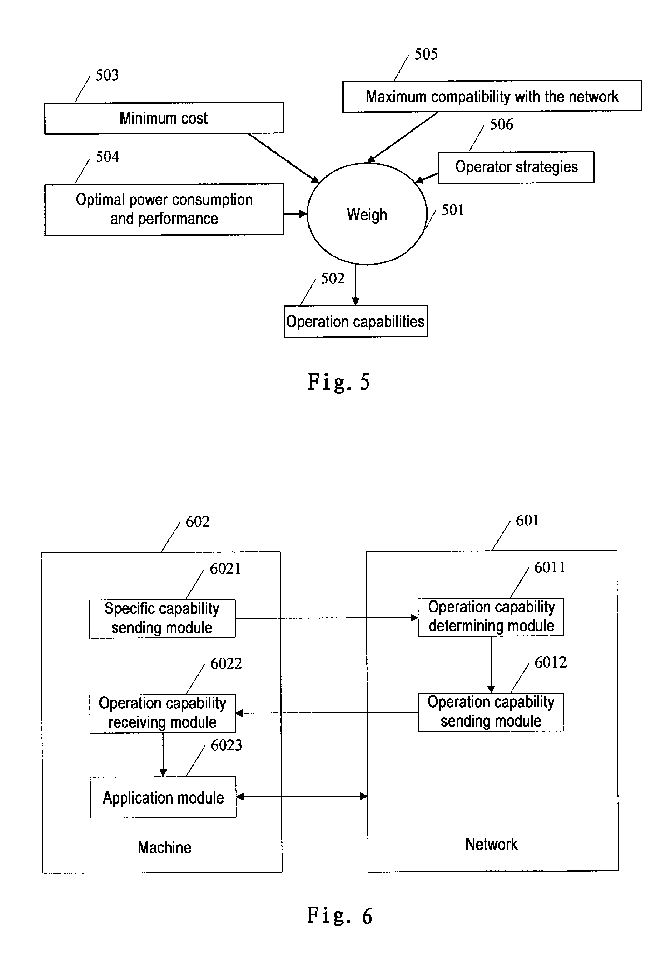

Fig. 5 shows a schematic diagram of factors that have to be taken into account for weighing operation capabilities most suitable for a machine. As shown in Fig. 5, for example, the weighing (501) may be performed to obtain the operation capabilities (502) suitable to the machine by comprehensively considering the following factors: the machine module should use a minimum capability to minimize the costs (503); the machine module should have a specific capability to optimize the performance and power consumption (504); the machine should support sufficient functions so as to maximize its compatibility with the network (505); the operator has its own strategies to define the capabilities and charging modes (506). Of course, the weighed factors are not limited to the above. The following factors may also be taken into account: the design of the machine module may be reused for other applications with a feasible cost, and the capabilities supported by the machine should be specific/optimal to the application of the machine, etc.

As an example, the network may determine when the machine should access to the network based on load conditions, or determine the transmit power of the machine based on a cell size. For example, if a cell is relatively large, it is determined that the machine should transmit with a larger transmit power. As such, the capabilities of the machine may be determined with a specific rule as required.

In this embodiment, the operation capabilities suitable for the machine, which are determined by the network in this step by weighing the above factors, are supposed to be: PUSCH, Turbo, QPSK 1/8, a transmit power level xx, a 1.25M bandwidth, and a filter and an antenna.

In step 303, the network sends the operation capabilities to the machine.

In this step, alternatively, while sending the operation capabilities to the machine, the network may also broadcast specific capabilities of the network 402 to the machine. Specifically, the network may broadcast to the machine the capabilities supported or considered preferred by the network. For example, the network may send to the machine the specific capabilities of the network, such as a transmission bandwidth and a sending cycle.

In step 304, the machine communicates with the network based on the determined operation capabilities.

In this step, if the machine has also received the specific capabilities from the network, then the machine determines an optimal operation capability based on the operation capabilities and specific capabilities from the network so as to communicate with the network using the optimal operation capability. For example, the machine selects a capability most suitable for the machine to communicate with the network based on the transmission bandwidth, the sending cycle and the like of the network, and the operation capabilities for the machine as determined by the network, thereby utilizing the relatively optimal capability to communicate with the network. Compared with communication directly utilizing the operation capabilities, it further optimizes the machine-type communication.

By far, the method ends. After step 304, if the machine re-initiates a session with the network, it would be unnecessary to repeat the above process, and the machine may directly communicate with the network using the above determined capability.

Although the above examples are described using a physical layer link, the embodiments of the present invention are not limited to be applied to the physical layer, and the embodiments of the present invention may also be applied to Layer 2 and Layer 3.

Fig. 6 shows a functional block diagram of a machine-type communication system 600 according to an embodiment of the present invention.

As shown in Fig. 6, a machine-type communication system 600 comprises a network 601 configured to determine operation capabilities of a machine 602 through a negotiation with the machine, and the machine 602 configured to communicate with the network 601 based on the determined operation capabilities.

The machine 602 comprises: a specific capability sending module 6021 configured to send specific capabilities of the machine 602 to the network 601, an operation capability receiving module 6022 configured to receive the operation capabilities from the network 601, and an application module 6023 configured to communicate with the network 601 based on the operation capabilities;

The network 601 comprises: an operation capability determining module 6011 configured to determine the operation capabilities of the machine 602 based on the specific capabilities of the machine 602, and an operation capability sending module 6012 configured to send the determined operation capabilities to the machine 602. Herein, the operation capability determining module 6011 may weigh the operation capabilities most suitable for the machine 602 by retrieving operator strategies, charging modes, and a user database.

Additionally, the operation capability sending module 6012 may further broadcast the specific capabilities of the network 601 to the machine 602 while sending the operation capabilities to the machine 602. In this case, the operation capability receiving module 6022 may not only receive the operation capabilities from the network 601, but also receive the specific capabilities from the network 601. In this case, the application module 6023 may determine an optimal operation capability based on the operation capabilities and the specific capabilities from the network 601 so as to communicate with the network 601 using the optimal operation capability.

The specific capabilities described above may comprise supported capabilities and preferred capabilities. Herein, the capabilities may comprise the capabilities on a physical layer link, for example, supported channels, encoding schemes, MCSs, transmit power levels, bandwidths, RF modules, etc.

Accordingly, it can be seen that the embodiments of the present invention assign capabilities for a machine with a negotiation mechanism, and it is unnecessary to assign a specific capability to the machine with respect to a specific application, such that not only the manufacturing costs of the machine but also the operation costs of the network are reduced. Further, through the negotiation, weighing may be performed in terms of costs, performances, quality, and compatibility, such that the machine can communicate with the network using an optimal performance.

Another basic conception of the embodiments of the present invention is that by pre-configuring, for a device fixed in a cell, transmission parameters for the cell, the device is enabled to directly match the cell without performing a cell search over the entire frequency band, and in the case of a successful match, data are directly received from the network without either of a previous reception of a BCH channel and a cell-specific reference signal. Apparently, it greatly simplifies the cell search process, such that the waste of resources may be reduced.

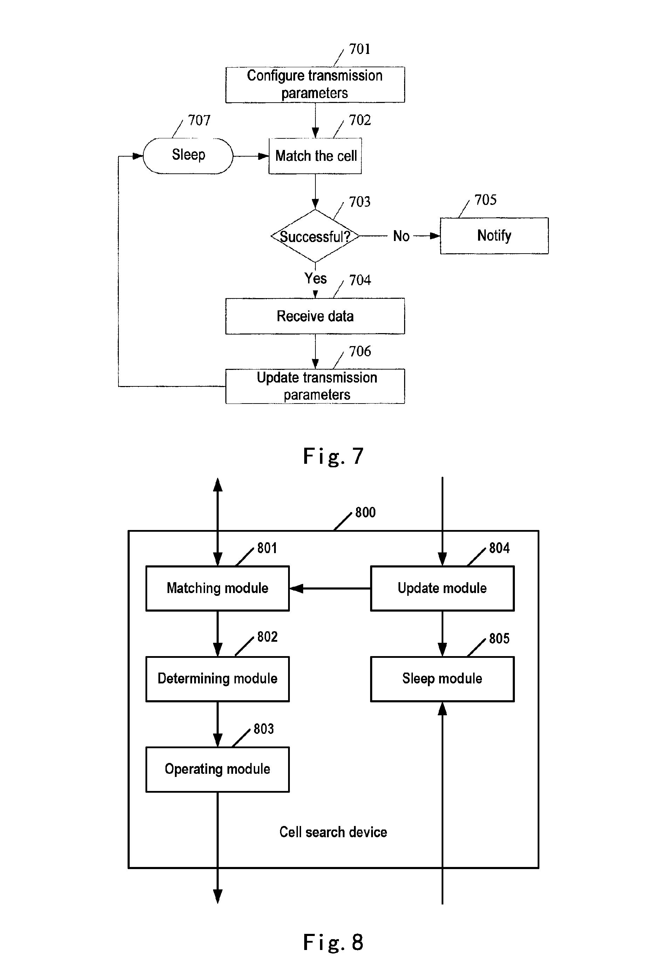

Fig. 7 shows a flowchart of a cell search method according to an embodiment of the present invention.

As shown in Fig. 7:

In step 701, transmission parameters for a cell are pre-configured for a device fixed in the cell.

In this embodiment, the device fixed in the cell may be an intelligent metering device and the like, for example, an intelligent water meter installed within a house. Because it is unmovable, it would be unnecessary for the intelligent water meter to perform a complex cell search process like a mobile terminal. In view of this, a series of transmission parameters may be pre-configured for the device with respect to the cell where the device is located. The transmission parameters include, but not limited to, a cell ID, a frequency, a scrambling code, and synchronization signals, etc.

In step 702, the device directly matches the cell using pre-configured transmission parameters.

Because the transmission parameters are pre-configured for the device, the device is not required to search a cell with a strongest signal over the entire frequency band, but it may directly match the cell where the device is located, i.e., perform synchronization.

In step 703, it is determined whether the match in step 702 is successful; if the match is successful, then the process proceeds to the step 704; otherwise, it proceeds to step 705.

In step 704, the device directly receives data, and the process proceeds to step 706.

In this embodiment, because the transmission parameters have been pre-configured, the device may directly receive data without first receiving BCH; moreover, the cell-specific reference signal is not required any more. Thus, the device may directly receive data and discard the received cell-specific reference signal.

In step 705, the device notifies entry into a non-normal state, and the process ends.

In this embodiment, the device may notify a user of entry into the non-normal state in various manners such as flickering, red light, sound, etc.

However, in the prior art, if the match fails, a cell search will be performed circularly until an available cell is found. However, the embodiments of the present invention do not need such troublesome steps, thereby simplifying the communication process. Meanwhile, the user is enabled aware of the current match condition, and thereby the interactivity with the user is increased, so that the currently encountered problem can be handled in real time.

In step 706, in the case that the device receives an indication of updating parameters, the device may update the pre-configured transmission parameters based on the indication of updating parameters for use in a next cell search.

This step may be executed after step 705, but not necessarily so. In this step, for example, if the network finds that the currently configured transmission parameters for the cell are not suitable for the device, the network may send the indication of updating parameters to the device. After receiving such an indication, the device may use new transmission parameters received from the network to replace the original transmission parameters based on the indication of updating the parameters. In the next cell search, the device may use the updated transmission parameters to perform the match with the cell.

For example, if the network finds that the cell ID previously assigned to the device is not suitable for the device any more, it may issue an indication to send a new cell ID to the device. Then in the next cell search, the device may use the new cell ID to perform the match with the cell corresponding to the cell ID.

In step 707, the device enters into a sleep state and waits to be activated after a certain period of time, and the process returns to step 702 after the device is activated.

In this step, after a predetermined period of time upon the entry into the sleep state by the device, i.e., after the expiration of a timer, the network may release the resources so as to activate the device to enter into step 702.

Fig. 8 shows a functional block diagram of a cell search device 800 according to an embodiment of the present invention.

As shown in Fig. 8, the cell search device 800 is fixed in a cell, and has transmission parameters pre-configured for the cell search device with respect to the cell. The cell search device 800 comprises: a matching module 801 configured to directly match the cell using the pre-configured transmission parameters; a determining module 802 configured to determine whether the match is successful; and an operating module 802 configured to directly receive data in the case that the determining module 802 determines a successful match.

The operating apparatus 803 may further notify entry into an abnormal state in the case of an unsuccessful match.

In addition, the cell search device 800 of the embodiment of the present invention may further comprise: an updating module 804 configured to update, upon receiving an indication of updating parameters, the pre-configured transmission parameters based on the indication of updating parameters for use by the matching module 801; and a sleep module 805 configured to enable, after the updating module 804 updates the transmission parameters, the cell search device to enter into a sleep state and wait to be activated after a certain period of time. For example, the cell search device may, by receiving resources released by the network, be activated to perform a next cell search.

Accordingly, it can be seen that the embodiments of the present invention enable, by assigning to the cell search device fixed in the cell the transmission parameters for the cell, the cell search device not to be required to search an available cell in the entire frequency band, receive the BCH channel, obtain cell-specific reference information, and even circularly perform matching in the case of a failed match, and thereby the transmit power and the uplink process are simplified to the utmost extent. As a result, the cell search process is greatly simplified, and the utilization of resources is improved. Further, because the transmission parameters configured for the cell search device may be updated, the cell search device is enabled to access different cells as required, which improves the flexibility.

Those skilled in the art would easily appreciate that different steps of the above method may be implemented through programming using a computer. Here, some embodiments likewise comprise a machine-readable or computer-readable program storage device (for example, a digital data storage medium) and encoded machine-executable or computer-executable program instructions, wherein the instructions execute some or all of the steps of the above methods. The program storage device may be for example a digital memory, a magnetic storage medium (such as a magnetic disk or magnetic tape), hardware, or an optical readable digital data storage medium. The embodiments likewise comprise a computer for executing the program recorded on the storage medium so as to execute the steps of the above method.

The above description with reference to the drawings is merely provided as examples for illustrating the present invention. Those skilled in the art would appreciate that different structures can be provided based on the above described principle of the present invention. Although these different structures are not explicitly described or shown, they embody the principle of the present invention and are included within the spirit and scope of the present invention. In addition, the examples as recited herein are mainly intended expressly to be only for pedagogical purposes to aid readers in understanding the principle of the present invention and the concept contributed by these inventors to furthering the art, which should be construed as being without limitations to those specifically recited examples and conditions. Moreover, all statements herein reciting principle, aspects, and embodiments of the present invention, as well as the specific examples thereof, encompass equivalents thereof.

## Claims

1. A machine-type communication method, comprising:
determining operation capabilities of a machine through a negotiation between the machine and a network; and
communicating, by the machine, with the network based on the determined operation capabilities.

2. The machine-type communication method according to claim 1, wherein the negotiation comprises:
sending, by the machine, specific capabilities thereof to the network; and
determining, by the network, the operation capabilities of the machine based on the specific capabilities of the machine, and sending the operation capabilities to the machine.

3. The machine-type communication method according to claim 2, wherein determining, by the network, the operation capabilities of the machine based on the specific capabilities of the machine comprises:
weighing, by the network, operation capabilities most suitable for the machine by retrieving operator strategies, charging modes, and a user database.

4. The machine-type communication method according to claim 2, further comprising:
broadcasting, by the network, specific capabilities of the network to the machine while sending the operation capabilities to the machine; and
determining, by the machine, an optimal operation capability based on the operation capabilities and the specific capabilities from the network, so as to communicate with the network using the optimal operation capability.

5. The machine-type communication method according to any one of claims 1 to 4, wherein the specific capabilities comprise supported capabilities and preferred capabilities.

6. The machine-type communication method according to claim 5, wherein the capabilities comprises the capabilities on a physical layer link.

7. A machine-type communication system, comprising:
a network configured to determine operation capabilities of a machine through a negotiation with the machine; and
the machine configured to communicate with the network based on the determined operation capabilities.

8. The machine-type communication system according to claim 7, wherein,
the machine comprises: a specific capability sending module configured to send specific capabilities of the machine to the network, an operation capability receiving module configured to receive the operation capabilities from the network, and an application module configured to communicate with the network based on the operation capabilities;
the network comprises: an operation capability determining module configured to determine the operation capabilities of the machine based on the specific capabilities of the machine, and an operation capability sending module configured to send the determined operation capabilities to the machine.

9. The machine-type communication system according to claim 8, wherein the operation capability determining module weighs operation capabilities most suitable for the machine by retrieving operator strategies, charging modes, and a user database.

10. The machine-type communication system according to claim 8, wherein,
the operation capability sending module is configured to broadcast specific capabilities of the network to the machine while sending the operation capabilities to the machine;
the operation capability receiving module is configured to receive the operation capabilities and the specific capabilities from the network; and
the application module is configured to determine an optimal operation capability based on the operation capabilities and the specific capabilities from the network, so as to communicate with the network using the optimal operation capability.

11. The machine-type communication system according to any one of claims 7 to 10, wherein the specific capabilities comprise supported capabilities and preferred capabilities.

12. The machine-type communication system according to claim 11, wherein the capabilities comprises the capabilities on a physical layer link.

13. A cell search method, comprising:
pre-configuring, for a device fixed in a cell, transmission parameters for the cell;
directly matching, by the device, the cell using the pre-configured transmission parameters; and
directly receiving, by the device, data in the case of a successful match.

14. The cell search method according to claim 13, further comprising: notifying, by the device, entry into an abnormal state in the case of a failed match.

15. The cell search method according to claim 13, further comprising: updating, by the device upon receiving an indication of updating parameters, the pre-configured transmission parameters based on the indication of updating parameters for use in a next cell search; and entering, by the device, into a sleep state after updating the transmission parameters, and waiting to be activated after a certain period of time.

16. A cell search device, wherein the cell search device is fixed within a cell and has transmission parameters for the cell preconfigured for the cell search device, the cell search device comprising:
a matching module configured to directly match the cell using the pre-configured transmission parameters;
a determining module configured to determine whether the match is successful; and
an operating module configured to directly receive data in the case that the determining module determines a successful match.

17. The cell search device according to claim 16, wherein the operating module is further configured to notify entry into an abnormal state in the case of a failed match.

18. The cell search device according to claim 16, further comprising:
an updating module configured to update, upon receiving an indication of updating parameters, the pre-configured transmission parameters based on the indication of updating parameters for use by the matching module; and
a sleep module configured to enable, after the updating module updates the transmission parameters, the cell search device to enter into a sleep state and wait to be activated after a certain period of time.
